# EUROPEAN PATENT SPECIFICATION

(11) **EP 1 484 981 B1**
(45) Date of publication and mention of the grant of the patent: **31.10.2007**
(21) Application number: 03706000.1
(22) Date of filing: 30.01.2003
(51) Int. Cl.: A22C 21/00, A22C 21/02

(54) **POULTRY PROCESSING HUB AND BELT ASSEMBLY**
NABEN- UND ANTRIEBSRIEMENANORDNUNG FÜR GEFLÜGELVERARBEITUNG
ENSEMBLE DE MOYEU ET DE COURROIE POUR LA TRANSFORMATION DE LA VIANDE DE VOLAILLE

(30) Priority: 30.01.2002 US 352487 P; 17.01.2003 US 346257
(43) Date of publication of application: 15.12.2004
(73) Proprietor: MEMCO, Hollister, MO 65672 (US)
(72) Inventor: CLARKE, Robert, A., Rogers, AR 72756 (US)
(74) Representative: Hössle Kudlek & Partner
(86) International application number: PCT/US2003/002823
(87) International publication number: WO 2003/063598

(56) References cited:
- GB-A- 1 226 317
- GB-A- 1 521 504
- GB-A- 2 098 454
- US-A- 3 611 475

## Description

### FIELD OF INVENTION

The present invention relates to the field of poultry processing equipment, particularly rotational hub and belt assemblies for de-feathering or plucking devices.

### BACKGROUND OF THE ART

Poultry processing industries commonly use automated lines to kill, eviscerate, pluck and further process birds. Rotational devices are generally employed to facilitate continuity of process and to minimize labor. One of the most common poultry processing machines is a plucker or de-featherer. For many years devices incorporating a number of pliable fingers have been utilized to beat and pull the feathers from bird carcasses.

In processing facilities, multiple finger-type plucking devices are used in sequence to fully pluck a carcass. Typical plucking processes incorporate opposing pairs of finger-typed pluckers which are sufficiently spaced apart to maneuver a bird carcass therebetween. Initial plucking is completed with a pair of spaced-apart finger-type pluckers having a plurality of rigid, spaced-apart fingers. Subsequent plucking of fine feathers is accomplished by passing the bird between opposed pairs of pluckers having multiple pliable fingers. Automated plucking devices are generally used to suspend and move the bird carcass along a line of opposed pairs of pluckers which depilate the carcass of all feathers from coarse to fine as the carcass travels along the processing line.

Typically, the pluckers of a processing line are powered by a motor which provides rotational force to each plucker via a chain or belt drive assembly. Early assemblies, such as the one known from US-3 611 475, utilized a single motor connected to each plucker hub. This method facilitated accurate control of individual hub speed which is necessary to mesh opposing pairs of hubs and to synchronize sequential hubs. Due to the high cost of purchasing and maintaining individual motors, eventually hubs were spaced-apart in sequence so that a single motor could be used to drive multiple pluckers. Single drive hub assemblies eliminated multiple motors but had several inherent problems.

Either a V-belt or flat belt is used to transfer the rotational force from the motor to each sequentially aligned hub. Hub drives incorporate a smooth pulley commonly used for drive belt applications. The drive belts frequently have to be adjusted to maintain the desired, and necessary pressure and friction between the belt and pulleys to drive the multiple pickers. Problems exist in that the smooth belts stretch and constant maintenance and attention is required to control the drive force.

Friction from belt slippage also accelerates wear and tear on hub assemblies, belts and motors.

GB 1 521 504 discloses a drive apparatus for a poultry plucking device for driving a plurality of adjacent counter rotable shafts each mounting a circular rotary member such as a pulley. At least one of the rotary members is driven. Two endless drive elements such as belts pass around diametrically opposite portions of the drive elements. A differential tensioning gear is provided collinearly with the work units or shafts. Each of the two belts pass around a twin pulley. The shaft of a work unit is mounted in bearings. A circular member mounting the plucking elements is mounted on one end of the shaft.

Efforts to remediate the stated deficiencies resulted in a drive assembly which utilized drive chains and hub sprockets rather than belts and pulleys. This improvement resulted in constant and consistent force transferal from the drive source to the hub assemblies. However, it is common that the poultry being processed, or the shackles from which bird carcasses are suspended, become entangled or otherwise disrupt the plucker assembly. When, for instance, a shackle becomes entangled in single plucker, continual force of the drive source will cause the chain to shear the sprocket of that plucker. Further, problems in the plucking process can result in the jumping, or unwanted movement of the chain in relation to the sequence of hub gear assemblies. Often, hub gears are made of hardened plastic in an effort to minimize the cost incurred by shearing of sprocket teeth. These inexpensive systems are prone to failure and require significant maintenance due, in large part, to the intrusion of dirt, feathers and fecal matter into the moving parts.

Prior to Applicant's invention, the state of the art in the industry was either the "V"or flat belt technology, or the chain and gear assembly described above. Both of these assemblies require constant maintenance and adjustment. Because of belt slippage and the friction imparted on a hub assembly by the belt, hubs wear very quickly and must be rebuilt or replaced on a regular basis. Gear and chain drives require constant maintenance and because of shackle entanglement in pluckers result in the shearing of teeth from the sprocket. Further, Applicant's invention incorporates seals adjacent each bearing which significantly limits the intrusion of foreign matter into the workings of the hub assembly. The presence of the seals, along with the configuration of pulleys and belts, limits required maintenance and component replacement.

### SUMMARY OF THE INVENTION

The present invention provides a poultry processing machine, particularly a hub and belt assembly such as a feather plucking device that facilitates timed rotation of driven members while diminishing wear and breakage commonly associated with such equipment. More particularly the device is a poultry processing apparatus which comprises a hub having a flange portion, a boss portion, a pulley end and a central bore extending therethrough. A hub plate, attachable to the hub, has a flare portion and a hub plate shaft bore alignable with the central bore of the hub. A drive shaft is mounted transversely through the central bore and hub plate shaft bore; the drive shaft further is provided with a pulley end and a spaced-apart drive end. A first bearing is positioned on the drive shaft at the hub plate and a second bearing is positioned on the drive shaft at the junction of the flange portion and boss portion.. A seal is preferably positioned adjacent each bearing and at the hub plate to effectively prevent foreign matter from wearing the drive shaft and bearings.

A drive belt is operatively connected to a pulley fastened to the drive shaft at the pulley end and to a spaced-apart drive source. A poultry defeathering device, such as pliable rubber fingers, is attached to the drive shaft at the drive end and rotation of the drive belt about the pulley spins the drive shaft in the first bearing, second bearing and third bearing within the hub housing thereby operatively rotating the poultry defeathering device.

Designed primarily for ganged sets of plucking arms, the hub and belt system utilizes a heat dissipating hub housing journalled to a drive shaft, preferably with at least two independent sealed bearings, and a timing belt which allows operators to alternate time opposed pairs of plucker arms to avoid entanglement of the process poultry, hangers and the plucking heads.

### BRIEF DESCRIPTION OF THE DRAWINGS

Figure 1 is a perspective side view of one embodiment of the inventive device.
Figure 2 is a perspective view of one inventive hub assembly.
Figure 3 is a sectional view of the inventive hub assembly taken along line 3 of Figure 2.
Figure 4 is a perspective view of another embodiment of the inventive hub assembly.
Figure 5 is a perspective view of another embodiment of the inventive hub assembly.
Figure 6 is a perspective view of yet another embodiment of the inventive hub assembly.
Figure 7 is a perspective view of another embodiment of the inventive hub assembly.

### DETAILED DESCRIPTION OF THE PREFERRED EMBODIMENT

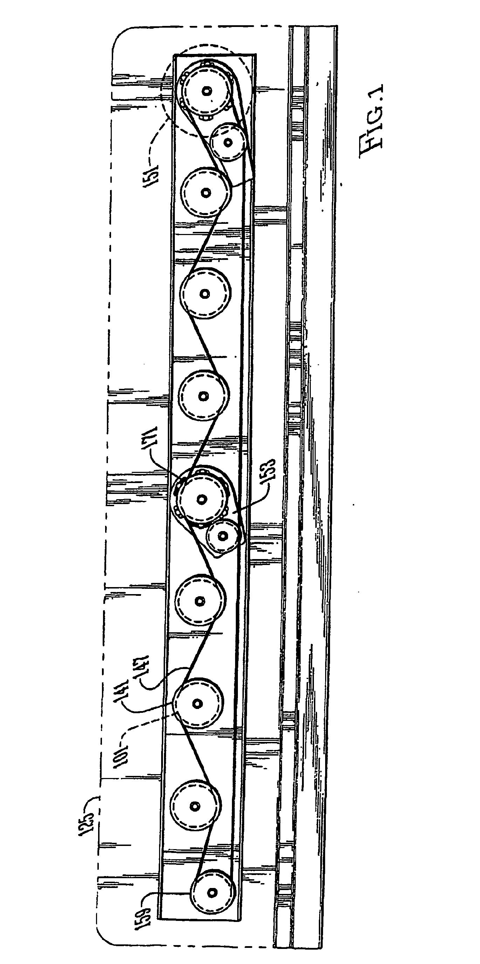

The present invention provides an assembly for efficiently rotating a gang of poultry processing equipment. A preferred embodiment of a hub 101 and belt 147 assembly for rotating processing equipment is generally shown in Figure 1.

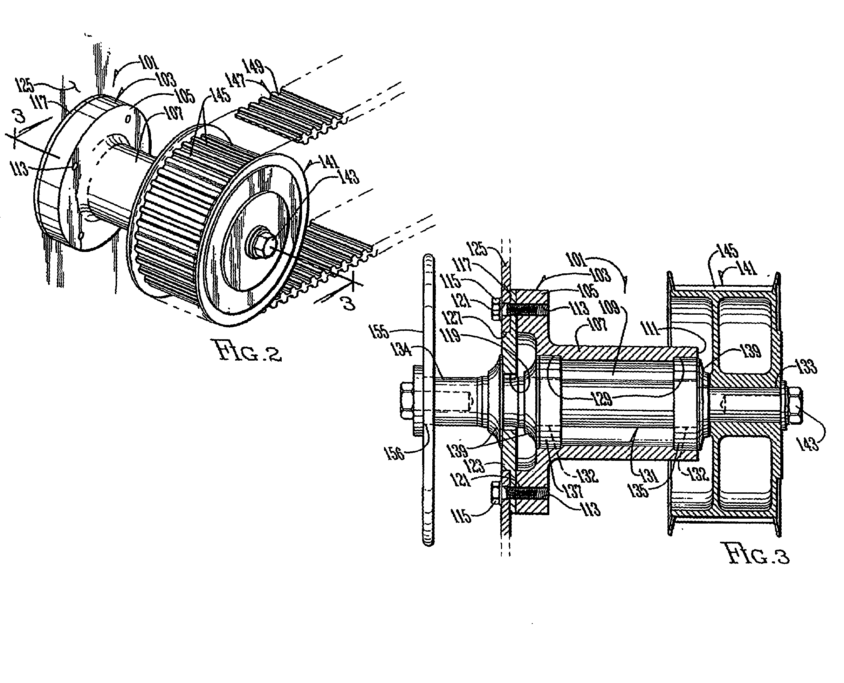

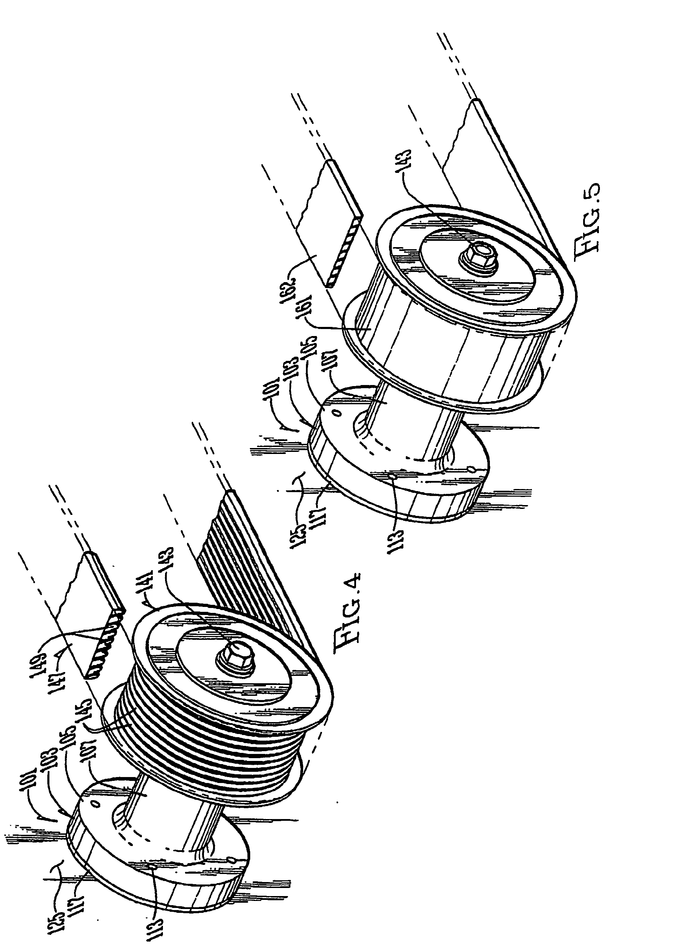

Referring now to Figures 1, 2 and 3, the hub 101 of the present invention includes a hub housing 103 having a flange portion 105, a boss portion 107 projecting laterally from one side of the flange portion 105 terminating at a pulley end 111, and a central bore 109 extending through the flange 105 and boss 107 along the general axis of the hub. Generally, the flange portion 105 is provided with a plurality of circumferentially oriented mounting holes 113 for attaching the hub to a machine cabinet 125 with screws or threaded bolts 115. A separate hub plate 117 is mountable to the hub housing 103 at the flange portion 105 opposite the boss portion 107. The hub plate 117 has a shaft bore 119 aligned with the central bore 109 and is further provided with a plurality of circumferentially oriented hub plate mounting holes 121 alignable with the mounting holes 113 of the flange portion 105. It is preferred that the hub housing 103 and hub plate 117 are manufactured of material which rapidly and efficiently dissipates heat such as aluminum.

Multiple outer bearing races 129 are formed within the central bore 109, preferably at the pulley end 111 of the boss portion 107, at the hub plate 117 attachment position and adjacent the junction of the flange portion 105 and boss portion 107. A drive shaft 131 is positioned through the central bore 109 of the hub 101 and the hub plate shaft bore 119. Multiple inner bearing races 132 are provided on the drive shaft 131 coincident with the outer bearing races 129 of the central bore 109 and the hub plate shaft bore 119. Sealed bearings 135 and 137 are fitted at each inner race 132 and outer race 129 thereby fastening the drive shaft 131 axially through the central bore 109 and hub plate shaft bore 119 while allowing the drive shaft 129 to freely rotate within the hub 101. It is preferred that a first bearing 135 is positioned at the pulley end 111 of the hub housing 103, a second bearing 137 positioned substantially near the junction of the flange portion 105 and boss portion 107. Additional bearing positions may be used depending on the size and application of the hub assembly.

Hub seals 139 are positioned on the drive shaft 131 adjacent each bearing 135 and 137. A seal 139 is also positioned adjacent the hub plate to prevent dirt and debris from invading the juncture of the drive shaft 131 and the hub plate 117. The combination of three seals 139 provides a near hermetic seal which eliminates invasion of feathers, feather parts, dirt, fecal matter and the like into the hub assembly.

The separate hub plate 117 has an insert flare 123 which has an outer circumference equal to the circumference of a machine cabinet opening 127 where the hub 101 is to be attached. This insert flare 123 provides a loose seal between the hub 101 and the machine cabinet 125 and further diminishes vibration and wear common in rotating processing equipment. The placement of a seal 139 on the drive shaft 131 at the insert flare 123 will significantly limit internal wear caused by the dust, feathers and debris inherent with the depiliating process.

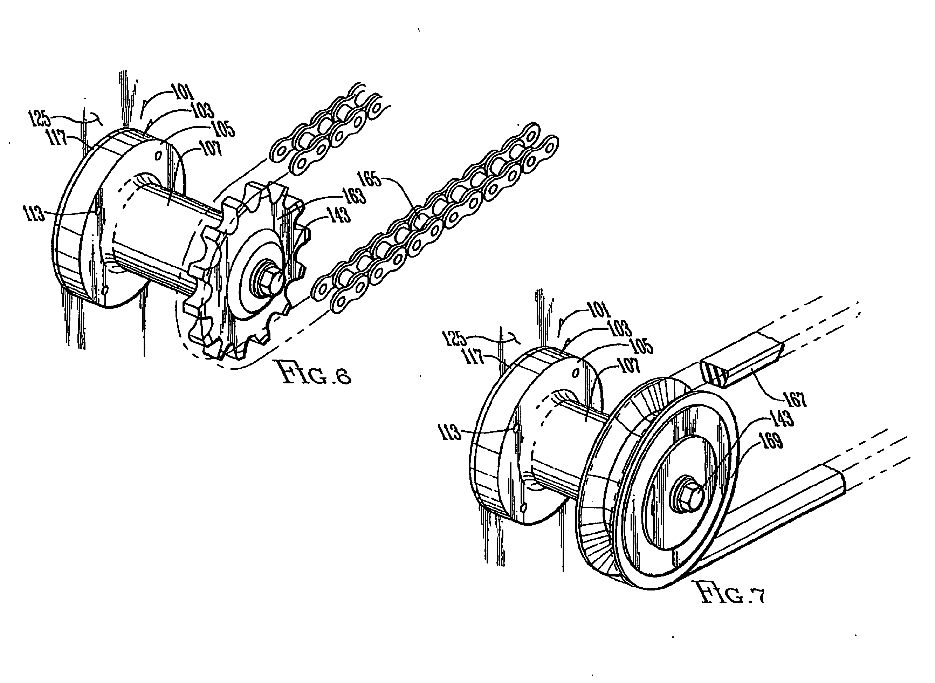

A pulley 141 is fastened, via a pulley attachment device 143 at a pulley end 133 of the drive shaft 131 adjacent the pulley end 111 of the hub housing 103. The pulley 141 is provided with a plurality of spaced-apart timing serrations 145. A timing belt 147, which is provided with a plurality of spaced apart serrations 149 which mate to the pulley serrations 145, connects the drive shaft 131 to a drive mechanism 151. The use of the timing belt 147 and serrated pulley 141 eliminates belt slippage common with poultry processing equipment powered with a flat or V-shaped belt. A second type of timing belt 147, as shown in Figure 4, may be used in place of the serrated belt.

As best shown in Figures 5 and 7, the pulley 141 can be exchanged with a common pulley 161 for use of a flat or V-shaped belt if desired, or in necessary situations such as when a timing belt is not available. If preferred, a user can exchange the pulley 141 with a gear 163 which can be driven with a chain 165 as shown in Figure 6. Therefore, while the preferred embodiment is described above,

the instant invention provides a triple drive option because a user can drive the rotational device using a timing belt 147, flat or V belt, or chain 165 by alternating the drive shaft 131 attachment with a serrated pulley 141, common "V" pulley 161 or flat pulley 163.

A finger plate bore 156 is formed in a second end 134 of the drive shaft 131 opposite the pulley end 133. For a defeathering device, a finger plate 155 is bolted into the finger plate bore 156. The finger plate 155 can be provided with a plurality of plucking fingers as is common in the industry.

As best shown in Fig. 1, the hub and belt assembly is suited to power a series of driven rotational defeatherers. The drive mechanism 151 and a belt return hub 159 are positioned at opposite ends of a series of substantially aligned hubs 101. A timing belt 147 encircles the drive mechanism 151 and return hub 159 and alternates above and below each sequential hub pulley 141. It is preferred that at least one springloaded tension arm and idler pulley 153 is provided at at least one hub 101 or to independently release belt tension should the finger plate 155, or any part of the plucker assembly, become jammed.

The series of hub and belt assemblies preferably utilizes a timing belt having two sides, each side provided with spaced-apart protruding serrations, and wherein the belt is alternated above and below each of the aligned pulleys.

Additional variations and embodiments other than those specifically enumerated may be made to the hub and belt assembly without departing from the scope of the disclosed invention. Therefore, it is intended that the invention not be limited to this disclosed embodiment, but only by the scope of the appended claims.

## Claims

1. A poultry processing apparatus, comprising:
(a) a plurality of spaced-apart hubs (101) in substantial alignment within a plane, each hub having a hub plate (117);
(b) a plurality of drive shafts (131), each drive shaft (131) mounted through a corresponding hub (101), each drive shaft (131) having a pulley end (111) and a drive end (134);
(c) at least one bearing (135, 137) disposed circumferentially about each drive shaft (131) for rotationally supporting the corresponding hub (101) ;
(d) a plurality of hub seals (139) disposed circumferentially about each drive shaft (131), wherein, for each drive shaft (131), a hub seal (139) is adjacent the bearing (135, 137) and a hub seal (139) is adjacent to the hub plate (117);
(e) a pulley (141) attached to each pulley end (111) of each drive shaft (131);
(f) a finger plate (155) attached to the drive end (134) of each drive shaft (131) for receiving a depilating device; and
(g) a single drive belt (147) operatively connecting the plurality of pulleys (141) to a drive source (151).

2. The poultry processing apparatus of claim 1, wherein the plurality of pulleys (141) is selected from the group consisting of: a timing belt pulley (141), a flat belt pulley (163), a V-belt pulley (161) and a sprocket (169) having teeth.

3. The poultry processing apparatus of claim 2, wherein the drive belt (145) is selected from the group consisting of: a timing belt (147), a flat belt (162), a V-belt (167) and a drive chain (165).

4. The poultry processing apparatus of claim 1 further comprising at least one tension arm and idler pulley (153).

5. The poultry processing apparatus of claim 9 1, wherein the drive belt is a timing belt (147) having spaced-apart protruding serrations (149) and further wherein each pulley (141) is provided with spaced apart recessed serrations (145) which mate with the protruding serrations (149) of the timing belt (147).

6. The poultry processing apparatus of claim 5, wherein the timing belt (147) has two sides, each side provided with spaced-apart protruding serrations (149), and further wherein the belt is alternated above and below each of the pulleys (141).

7. The poultry processing apparatus of claim 1, wherein the depilating device is a plurality of plucking fingers.

## Patentansprüche

1. Geflügelverarbeitungsvorrichtung, mit:
(a) mehreren beabstandeten Naben (101), die in einer Ebene im Wesentlichen ausgerichtet sind, wobei jede Nabe eine Nabenplatte (117) besitzt;
(b) mehreren Antriebswellen (131), wobei jede Antriebswelle (131) durch eine entsprechende Nabe (101) hindurch montiert ist, wobei jede Antriebswelle (131) ein Riemenscheibenende (111) und ein Antriebsende (134) besitzt;
(c) wenigstens einem Lager (135, 137), das in Umfangsrichtung um jede Antriebswelle (131) angeordnet ist, um die entsprechende Nabe (101) rotatorisch zu unterstützen;
(d) mehreren Nabendichtungen (139), die in Umfangsrichtung um jede Antriebswelle (131) angeordnet sind, wobei für jede Antriebswelle (131) eine Nabendichtung (139) zu dem Lager (135, 137) benachbart ist und eine Nabendichtung (139) zu der Nabenplatte (117) benachbart ist;
(e) einer Riemenscheibe (141), die jeweils an einem Riemenscheibenende (111) jeder Antriebswelle (131) befestigt ist;
(f) einer Fingerplatte (155), die an dem Antriebsende (134) jeder Antriebswelle (131) befestigt ist, um eine Depilierungsvorrichtung aufzunehmen; und
(g) einem einzigen Antriebsriemen (147), der die mehreren Riemenscheiben (141) mit einer Antriebsquelle (151) funktional verbindet.

2. Geflügelverarbeitungsvorrichtung nach Anspruch 1, wobei die mehreren Riemenscheiben (141) aus der Gruppe ausgewählt sind, die besteht aus: einer Synchronriemenscheibe (141), einer Flachriemenscheibe (163), einer V-Riemenscheibe (161) und einem Kettenrad (169) mit Zähnen.

3. Geflügelverarbeitungsvorrichtung nach Anspruch 2, wobei die Antriebsriemen (145) aus der Gruppe ausgewählt ist, die besteht aus: einem Synchronriemen (147), einem Flachriemen (162), einem V-Riemen (167) und einer Antriebskette (165).

4. Geflügelverarbeitungsvorrichtung nach Anspruch 1, ferner mit wenigstens einem Spannarm und einer Leerlaufriemenscheibe (153).

5. Geflügelverarbeitungsvorrichtung nach Anspruch 1, wobei der Antriebsriemen ein Synchronriemen (147) mit voneinander beabstandeten vorstehenden Zacken (149) ist und wobei ferner jede Riemenscheibe (141) mit beabstandeten ausgesparten Zacken (145), die mit den vorstehenden Zacken (149) des Synchronriemens (147) zusammenpassen, versehen ist.

6. Geflügelverarbeitungsvorrichtung nach Anspruch 5, wobei der Synchronriemen (147) zwei Seiten besitzt, wobei jede Seite mit beabstandeten vorstehenden Zacken (149) versehen ist, und wobei ferner der Riemen abwechselnd oberhalb und unterhalb jeder der Riemenscheiben (141) verläuft bzw. alterniert wird.

7. Geflügelverarbeitungsvorrichtung nach Anspruch 1, wobei die Depiliervorrichtung mehrere Rupffinger umfasst.

## Revendications

1. Dispositif de traitement de volaille, comportant :
(a) une pluralité de moyeux espacés (101) alignés sensiblement dans un plan, chaque moyeu ayant une plaque de moyeu (117) ;
(b) une pluralité d'arbres d'entraînement (131), chaque arbre d'entraînement (131) étant monté sur un moyeu correspondant (101), chaque arbre d'entraînement (131) ayant une extrémité de poulie (111) et une extrémité d'entraînement (134) ;
(c) au moins un palier (135, 137) disposé circonférentiellement autour de chaque arbre d'entraînement (131) pour supporter en rotation le moyeu correspondant (101) ;
(d) une pluralité de joints d'étanchéité de moyeu (139) disposés circonférentiellement autour de chaque arbre d'entraînement (131), où, pour chaque arbre d'entraînement (131), un joint d'étanchéité de moyeu (139) est adjacent au palier (135, 137), et un joint d'étanchéité de moyeu (139) est adjacent à la plaque de moyeu (117) ;
(e) une poulie (141) fixée sur chaque extrémité de poulie (111) de chaque arbre d'entraînement (131) ;
(f) une plaque de doigts (155) fixée sur l'extrémité d'entraînement (134) de chaque arbre d'entraînement (131) pour recevoir un dispositif de déplumage ; et
(g) une courroie d'entraînement unique (147) reliant de manière opérationnelle la pluralité de poulies (141) à une source d'entraînement (151).

2. Dispositif de traitement de volaille selon la revendication 1, dans lequel la pluralité de poulies (141) sont sélectionnées dans le groupe comportant : une poulie de courroie de synchronisation (141), une poulie de courroie plate (163), une poulie de courroie en V (161) et un pignon (169) ayant des dents.

3. Dispositif de traitement de volaille selon la revendication 2, dans lequel la courroie d'entraînement (145) est sélectionnée dans le groupe comportant : une courroie de synchronisation (147), une courroie plate (162), une courroie en V (167) et une chaîne d'entraînement (165).

4. Dispositif de traitement de volaille selon la revendication 1, comportant au moins un bras de tension et une poulie montée folle (153).

5. Dispositif de traitement de volaille selon la revendication 1, dans lequel la courroie d'entraînement est une courroie de synchronisation (147) ayant des dentures faisant saillie espacées (149), et en outre dans lequel chaque poulie (141) est munie de dentures évidées espacées qui s'apparient avec les dentures faisant saillie (149) de la courroie de synchronisation (147).

6. Dispositif de traitement de volaille selon la revendication 5, dans lequel la courroie de synchronisation (147) a deux côtés, chaque côté étant muni de dentures faisant saillie espacées (149), et en outre dans lequel la courroie est en alternance au-dessus et en dessous de chacune des poulies (141).

7. Dispositif de traitement de volaille selon la revendication 1, dans lequel le dispositif de déplumage est constitué d'une pluralité de doigts de déplumage.
